# FASCICULE DE BREVET EUROPEEN

(11) **EP 2 260 984 B1**
(45) Date de publication et mention de la délivrance du brevet: **29.08.2012**
(21) Numéro de dépôt: 09447024.2
(22) Date de dépôt: 10.06.2009
(51) Int. Cl.: B26D 3/30, B26D 7/06, B26D 7/26, A21C 15/04

(54) **Méthode et dispositif pour trancher du pain**
Methode und Vorrichtung zum Schneiden von Brot
Method and device for slicing bread

(43) Date de publication de la demande: 15.12.2010
(73) Titulaire: Hahn A. bvba, 1501 Buizingen (BE)
(72) Inventeur: Hahn, André, 1501 Buizingen (BE)
(74) Mandataire: Cauchie, Daniel

(56) Documents cités:
- EP-A- 0 615 821
- DE-A1- 19 829 107
- DE-U1-202004 006 594
- DE-U1-202005 018 732
- US-A- 1 417 843
- US-A- 1 879 796
- US-A- 1 903 238
- US-A- 2 163 791
- US-A- 2 235 546
- US-A- 2 347 007

## Description

La présente invention se rapporte de manière générale à une méthode pour trancher du pain ainsi qu'à un dispositif pour sa mise en oeuvre.

Plus particulièrement l'invention concerne une méthode pour trancher du pain, en particulier de forme oblongue ou sensiblement oblongue tel que baguette de pain et petit pain rond ou allongé, au départ d'un boîtier comprenant une ou plusieurs parois latérales longitudinales délimitant un premier compartiment dit déversoir pour l'introduction du pain à trancher et un second compartiment dit compartiment de coupe et dont une des parois latérales de ce boîtier ou la paroi latérale unique de ce boîtier est pourvue, au niveau du compartiment de coupe, d'une fente longitudinale pour passage d'une lame circulaire de coupe apte à tourner dans le sens antihorlogique et montée à rotation autour d'un axe extérieur au boîtier, cette méthode consistant à introduire le pain dans le déversoir après avoir adapté, selon les besoins, la distance à l'intérieur du boîtier entre l'extrémité de la lame et, situé en regard de la fente, un moyen fixe pour le guidage du pain et à réceptionner le pain tranché.

Les pains de forme oblongue par exemple les pains dénommés communément, petits pains, baguettes, ficelles, ciabatta ou autres sont généralement consommés après les avoir tranchés dans le sens longitudinal et sur la totalité de leur largeur, de manière à en séparer deux moitiés, ou sur une fraction de celle-ci en vue de les ouvrir. D'ordinaire, cette opération est réalisée de façon entièrement manuelle, l'une des mains de l'exécutant tenant fermement le pain à trancher tandis que l'autre réalise la coupe proprement dite au moyen d'un couteau approprié. Toutefois, cette opération n'est pas sans présenter plusieurs inconvénients à la fois pour l'opérateur, le consommateur et l'environnement. En effet, l'opérateur court le risque d'une blessure à la paume de la main ou aux doigts ainsi que l'apparition d'irritations ou même de griffures par suite de l'effet abrasif provoqué par la croûte des pains lors de manipulations trop fréquentes de ceux-ci. En outre, les manipulations du pain à trancher par l'opérateur sont loin d'assurer, au consommateur le niveau d'hygiène souhaité. Enfin, le tranchage effectué habituellement au-dessus d'une table de travail provoque l'éparpillement de nombreuses miettes qui souillent l'environnement.

On connaît déjà des dispositifs pour trancher du pain. A titre d'exemple, on a décrit dans la demande de brevet allemand DE 19829107 un dispositif pour la coupe de petits pains lesquels sont introduits dans une cavité d'un boîtier. Cette cavité, pourvue de lames oscillant dans une fente pratiquée à sa partie inférieure est munie, par ailleurs, d'un patin de serrage actionné par une poignée sur deux barres verticales pour pousser le pain vers les lames. D'autre part, une ouverture permet de recueillir le pain coupé, les miettes étant récoltées dans un récipient.

De même, on a rapporté dans le modèle d'utilité allemand DE 20 2004006594 U1 un dispositif pour la coupe de petits pains et de baguettes de pain lequel comporte deux compartiments parallèles en forme de U d'égales dimensions reliés ensemble longitudinalement ainsi qu'une lame circulaire horizontale qui permet une coupe dans chacun des compartiments. La lame est actionnée par un moteur électrique l'un et l'autre pouvant être élevés ou abaissés par un ascenseur pour des réglages de hauteur. En outre une chaîne ou courroie, munie de dents, pousse les petits pains et baguettes vers la lame de coupe.

On peut citer également le modèle d'utilité allemand DE 20 2005018732 U1 qui décrit un dispositif pour la coupe automatique de petits pains et de baguettes de pain, ce dispositif comprenant un compartiment incliné séparé horizontalement par une lame circulaire parallèle à la base de ce compartiment. Dans ce dernier, après abaissement d'une paroi de séparation via un moyen de commande, la baguette de pain ou le petit pain à trancher glisse vers la lame et passe au-travers de celle-ci sous l'effet d'un taquet poussoir. Celle-ci divise la baguette ou le petit pain horizontalement lequel tombe alors dans un compartiment en contre-bas où il peut être récupéré par une fente. Le taquet poussoir est divisé en deux parties, l'une positionnée sous la lame l'autre au-dessus de celle-ci.

Par ailleurs, le brevet européen EP 0615821 rapporte un dispositif pour la coupe de pain lequel comporte un compartiment situé en avant de lames de coupe. Le pain est introduit dans ce dispositif via une ouverture d'insertion et est dirigé par une tôle de guidage vers les lames en glissant sur un plancher.

Toutefois, aucun des dispositifs rapportés précédemment n'est capable de trancher la baguette de pain ou le petit pain sur sa longueur totale tout en adaptant la profondeur de coupe sur sa largeur de manière à effectuer un tranchage sur la totalité de cette largeur mais aussi, selon les besoins, sur une fraction de celle-ci en vue d'obtenir, dans le sens longitudinal, une ouverture de la baguette ou du petit pain.

D'autre part, les documents US 2.235.546 ; US 1.417.843 ; US 1.903.238 et US 1.879.796 définissent des méthodes et dispositifs selon les préambules des revendications 1 et 3. Selon ces méthodes, la profondeur de coupe dans la largeur du pain peut être adaptée par déplacement de parois. Toutefois, ces méthodes provoquent des pertes de temps vu la nécessité d'effectuer plusieurs manipulations à chaque changement de profondeur de coupe telles que le dévissage et le revissage de plusieurs écrous ainsi que l'ajustement de parois.

La présente invention a pour but de proposer une méthode, du type indiqué précédemment, capable de pallier ces inconvénients en ce quelle permet, tout en assurant la sécurité de l'utilisateur et avec un gain de temps substantiel par rapport aux méthodes connues, de trancher du pain de forme oblongue sur la totalité de sa longueur mais également et surtout selon la profondeur désirée dans sa largeur c'est-à-dire selon sa largeur totale ou selon une partie de celle-ci.

Pour atteindre ce but, la méthode, selon l'invention est caractérisée en ce que la distance à l'intérieur du boitier est adaptée par modification de la position de l'axe support de la lame, en sorte que sous l'effet de ladite lame en rotation, le pain, rendu mobile par application de la force d'entraînement de cette lame, est tranché longitudinalement sur sa largeur totale ou sur une partie de celle-ci.

Par "paroi latérale", on entend plus précisément dans le cadre de la présente invention, une paroi latérale du boîtier configuré sous forme d'un polyèdre c'est-à-dire une paroi délimitée par deux arêtes transversales et deux arêtes longitudinales telle qu'une paroi d'un parallélépipède.

De même, on entend par "portion de paroi latérale", une portion d'une paroi latérale unique d'un volume délimité par deux arêtes transversales reliées par cette paroi telle qu'une portion de paroi latérale d'un cylindre.

Selon un mode de réalisation de la méthode selon l'invention, l'adaptation de la distance, à l'intérieur du boîtier, entre l'extrémité de la lame et le moyen de guidage peut être envisagée en modifiant la position de l'axe support de la lame par déplacement de cet axe, à l'extérieur du boîtier, depuis une position d'extrémité distale jusqu'à une position d'extrémité proximale et inversement.

Dans ce mode de réalisation, le moyen de guidage comprend généralement, en regard de la fente, la paroi latérale du boîtier, une portion de paroi latérale unique du boîtier, une paroi supplémentaire rapportée à l'intérieur du boîtier ou une portion de paroi supplémentaire rapportée à l'intérieur du boîtier.

Cette paroi supplémentaire ou cette portion de paroi supplémentaire sont inamovibles, c'est-à-dire non séparables du boîtier, de préférence, non mobiles à l'intérieur de celui-ci et situées dans une position d'extrémité distale.

Selon une mise en oeuvre préférée de ce mode de réalisation de la méthode selon l'invention, le moyen de guidage comprend plusieurs portions de parois supplémentaires rapportées à l'intérieur du boîtier et susceptibles de déformation élastique, l'une de ces portions étant éventuellement opposée à la fente. Un tel moyen de guidage peut équivaloir, par exemple, à un ou plusieurs couples d'ailettes, les ailettes de chaque couple étant disposées, à l'intérieur du boîtier, sur deux parois latérales opposées ou sur deux portions de paroi latérale unique opposées.

Pour la mise en oeuvre de la méthode selon l'invention, on peut faire appel à un dispositif formé d'un boîtier comprenant une ou plusieurs parois latérales longitudinales délimitant un premier compartiment dit déversoir pour l'introduction du pain à trancher, un second compartiment dit compartiment de coupe et éventuellement un troisième compartiment dit réceptacle pour la réception du pain tranché, ladite paroi latérale unique ou l'une desdites parois latérales étant pourvue, à hauteur du compartiment de coupe, d'une fente pour passage d'une lame circulaire de coupe apte à tourner dans le sens antihorlogique et montée à rotation sur un axe extérieur au boîtier, caractérisé :
- en ce que la position de cet axe support est mobile par rapport à la fente et la portion de lame à l'intérieur du compartiment de coupe a une longueur sensiblement égale ou inférieure à la largeur de ce compartiment, et
- en ce qu'il comporte, situé à l'intérieur du boitier et éventuellement en regard de la fente, un moyen fixe pour le guidage du pain.

Le boîtier comprend généralement une paroi latérale unique laquelle correspond, de préférence, à la paroi latérale d'un cylindre. Toutefois, selon certains modes de réalisation, ce boîtier peut comprendre plusieurs parois donnant ainsi naissance à un polyèdre tel qu'un parallélépipède. A moins qu'il ne se prolonge par un réceptacle pour la réception du pain tranché, ce boîtier est généralement ouvert à sa base qui présente habituellement une forme polygonale, elliptique ou de préférence circulaire. Le sommet de l'ensemble ainsi formé peut être éventuellement recouvert d'un couvercle amovible ou solidarisé à la paroi latérale ou à l'une d'entre elles par l'intermédiaire d'un moyen approprié tel qu'une charnière. Accessoirement, le boîtier peut présenter, sur l'une de ses parois latérales ou sur sa paroi latérale unique, une portion de paroi capable d'ouverture/fermeture de manière à livrer accès, en cas de besoin, à l'intérieur de ce boîtier.

La fente, dont la longueur est habituellement sensiblement supérieure au diamètre de la lame, est pratiquée longitudinalement dans la paroi latérale unique du boîtier ou l'une des parois latérales du boîtier.

L'axe de la lame, quant à lui, est monté mobile par rapport à la fente entre une position d'extrémité proximale en sorte que la ligne de coupe de la lame en question occupe sensiblement la largeur totale du compartiment de coupe et une position d'extrémité distale en sorte que la ligne de coupe de cette lame pénètre légèrement à l'intérieur de ce compartiment de coupe.

Selon un mode de réalisation du dispositif selon l'invention, l'axe support de la lame de coupe est mobile depuis une position d'extrémité proximale, par rapport à la fente, en sorte que la ligne de coupe de cette lame occupe sensiblement la largeur du compartiment de coupe, jusqu'à une position d'extrémité distale en sorte que la ligne de coupe de cette lame pénètre légèrement à l'intérieur de ce compartiment de coupe. Dans ce cas, le moyen de guidage est disposé fixe à l'intérieur du boîtier généralement à l'intérieur du compartiment de coupe et du déversoir.

Ainsi:
a) Selon une première mise en oeuvre de ce mode de réalisation, le moyen de guidage fixe comprend, opposée à la fente, la paroi latérale du boîtier ou une portion de paroi latérale unique du boîtier.
b) Selon une seconde mise en oeuvre de ce mode de réalisation, le moyen de guidage fixe comprend, opposée à la fente, une paroi supplémentaire, formant butée, rapportée à l'intérieur du boîtier ou une portion de paroi supplémentaire formant également butée et également rapportée à l'intérieur du boîtier.

Toutefois, selon un aspect particulier et préféré de cette seconde mise en oeuvre du dispositif de l'invention, le moyen de guidage fixe comprend plusieurs portions de parois supplémentaires, formant butées, rapportées à l'intérieur du boîtier, l'une de ces portions étant éventuellement opposée à la fente.

Préférentiellement, ces portions de parois supplémentaires se présentent sous forme d'au moins un couple d'ailettes en sorte qu'au moins une ailette est éventuellement positionnée en regard de la fente et que les ailettes de chaque couple sont disposées:
a) chacune sur une des parois latérales, ces ailettes étant opposées l'une à l'autre
   ou
b) chacune sur une des portions de la paroi latérale unique, ces ailettes étant opposées l'une à l'autre.

D'autre part, selon une mise en oeuvre préférée de ce mode de réalisation de l'invention, le dispositif comprend au moins deux couples d'ailettes, l'axe reliant les ailettes d'un couple étant perpendiculaire à l'axe reliant les ailettes du couple immédiatement adjacent.

Les ailettes, en question, comportent notamment deux bords transversaux, un premier bord transversal ou supérieur représenté par le bord le plus proche du déversoir et un second bord transversal ou inférieur représenté par le bord le plus éloigné du déversoir. Dans cette configuration, le bord transversal supérieur est solidarisé, par exemple par soudage ou collage, à la paroi latérale en question ou à la portion de paroi latérale unique en question tandis que le bord transversal inférieur est maintenu flottant. D'autre part, chaque ailette forme avec soit la paroi latérale à laquelle elle est solidarisée soit la portion de paroi latérale unique à laquelle elle est fixée, un angle dirigé dans le sens de déplacement du pain. En outre, l'amplitude de cet angle peut varier en raison de la capacité de déformation élastique de cette ailette, formant ainsi ressort, lorsqu'une force lui est appliquée notamment une force engendrée par la pression exercée par le pain en transit dans le boîtier. Cette capacité de déformation élastique de l'ailette est avantageusement mise à profit pour faire face à des variations d'épaisseur et/ou de largeur des différentes sortes de pain à trancher.

Lors de la mise en oeuvre de ce mode de réalisation du dispositif selon l'invention, le pain est tranché sur la totalité de sa largeur lorsque l'axe de cette lame se trouve en position proximale ou simplement sur la plus petite fraction désirée de cette largeur lorsque l'axe en question se trouve en position distale.

Selon une caractéristique supplémentaire de l'invention, le boîtier est muni intérieurement de moyens de déclenchement et d'arrêt d'un moteur d'entraînement de l'axe support de la lame. Il peut s'agir notamment d'un moyen de déclenchement/arrêt équivalant, par exemple, à un interrupteur dont l'ouverture ou la fermeture est provoquée par la présence ou l'absence de pression exercée lors d'une déformation du moyen de guidage suite à un contact ou à une absence de contact avec le pain à trancher.

Toutefois, lorsque le moyen de guidage en question est représenté par plusieurs couples d'ailettes, le moyen approprié pour le déclenchement du moteur est apte à entrer en contact avec une ailette de ce moyen de guidage située au niveau du déversoir et le moyen approprié pour l'arrêt est apte, quant à lui, à entrer en contact avec une ailette de ce même moyen de guidage située au niveau du compartiment de coupe. Ces contacts proviennent généralement d'une déformation de ces ailettes en raison de leur élasticité. Lors d'une mise en oeuvre de ces moyens de déclenchement/arrêt, le déclenchement s'opère par contact de l'ailette appropriée avec le moyen de déclenchement situé au niveau du déversoir et ce, en raison de la pression exercée par le pain. Par contre, l'arrêt se produit par rupture du contact de l'ailette appropriée avec le moyen d'arrêt et ce, après passage du pain. Quant aux moyens appropriés pour provoquer ce déclenchement ou cet arrêt du moteur, il s'agit habituellement d'un capteur de pression ou d'un interrupteur.

D'une autre manière, le moyen de déclenchement/arrêt peut être représenté par un capteur lumineux, tel qu'une cellule photoélectrique, disposé à l'intérieur du déversoir et dont l'interruption ou non du flux lumineux, par le pain, déclenche ou au contraire arrête le monteur d'entraînement de la lame circulaire.

D'autre part, selon un autre mode de réalisation de l'invention, le boîtier comprend un troisième compartiment dit réceptacle divisé lui-même en deux chambres à savoir un premier chambre dite supérieure pour la réception du pain tranché séparée d'une seconde chambre dite inférieure par un moyen apte à livrer passage aux miettes provenant de la coupe et non au pain tranché. Un tel moyen peut être avantageusement représenté par une grille séparatrice.

Par contre, selon un mode de réalisation supplémentaire de l'invention, le réceptacle décrit précédemment peut être complètement désolidarisé du boîtier. Cette mise en oeuvre est indiquée en particulier lorsque le pain à trancher présente une longueur particulièrement importante

De manière à compléter avantageusement le boîtier, le réceptacle et le compartiment aux miettes sont séparés par une grille apte à assurer le passage de ces miettes et la retenue du pain tranché.

Habituellement, le boîtier faisant partie du dispositif selon l'invention ainsi que l'ensemble des accessoires s'y rapportant tels que moyen de guidage, capteur, lame circulaire et autres sont fabriqués en des matériaux compatibles avec une utilisation à des fins alimentaires. Il s'agit avantageusement d'une matière métallique telle que l'acier inoxydable ou une matière polymérique synthétique telle que le polyuréthane ou un polymère polyacétal tel que le matériau ERTACETAL ^{®}.

L'invention sera mieux comprise et d'autres buts, caractéristiques et avantages de celle-ci apparaîtront plus clairement au cours de la description explicative qui va suivre faite en référence aux dessins annexés donnés uniquement à titre d'exemple illustrant un mode de réalisation de l'invention et dans lesquels:
- la figure 1 est une vue en coupe frontale selon l'axe X-X d'un dispositif de coupe selon l'invention,

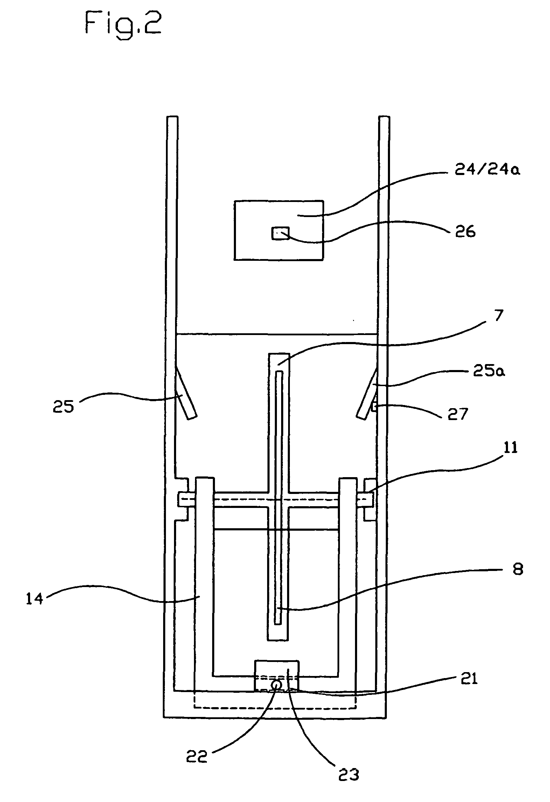

- la figure 2 est une vue en coupe latérale du dispositif à la figure 1,
- la figure 3 est une vue en coupe transversale du dispositif aux figures 1 et 2.

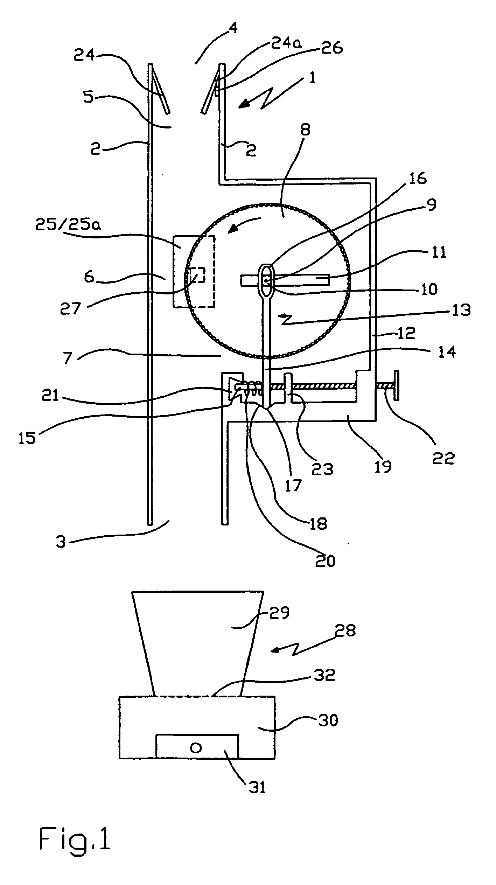

Tel que représenté à la figure 1, le dispositif de tranchage selon l'invention comprend un boîtier 1 formé essentiellement d'une paroi 2 latérale et longitudinale unique. D'autre part, ce boîtier est ouvert à sa base 3 transversale de forme circulaire ainsi qu'à son sommet 4 également de forme circulaire. Le cylindre ainsi formé est divisé longitudinalement en deux compartiments, c'est-à-dire un déversoir 5 pour l'introduction par exemple d'une baguette de pain à trancher et un compartiment 6 pour la coupe de cette baguette. Par ailleurs, une portion de la paroi 2 latérale comporte une fente 7 longitudinale qui accueille le passage d'une lame circulaire 8 de coupe. Cette lame est montée sur l'axe 9 transversal qui est apte à tourner sur lui-même sous l'impulsion d'un moteur électrique (non représenté) fixé sur cet axe de manière à entraîner la rotation de la lame en question dans le sens antihorlogique. En outre, cet axe 9 est lui-même monté sur roulement à billes placé à l'intérieur d'un tube support 10 dont les extrémités sont aptes à se déplacer dans des rainures 11 pratiquées dans la paroi 12 d'un enflement du boîtier 1 et ce, depuis une position d'extrémité proximale par rapport à la fente 7 jusqu'à une position d'extrémité distale. On remarque également une béquille 13 formée d'une portion longitudinale 14 et d'une portion transversale 15. L'extrémité 16 de la portion 14 est, en outre, solidaire de l'axe 9 situé dans le tube support 10 tandis que l'extrémité opposée 17 est montée pivotante dans une rainure 18 pratiquée dans la base 19 de l'enflement. D'autre part, la portion transversale 15, qui supporte un ressort 20, est également insérée pivotante dans une rainure 21 réalisée dans la paroi 2 alors qu'une tige filetée 22 traverse de part en part la paroi 12 et le support 23 en coopérant avec un taraudage pratiqué dans ces mêmes paroi et support.

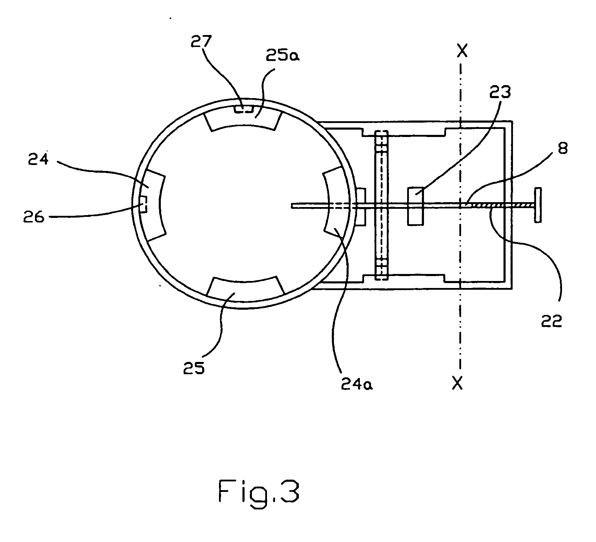

Par ailleurs la figure 1 montre également que la paroi 2 du boîtier 1 est également pourvue d'une première portion d'un moyen de guidage capable d'assurer un centrage du pain, cette première portion prenant la forme d'un couple d'ailettes 24,24a placées en opposition l'une de l'autre au niveau du déversoir 5, chacune formant ressort. On remarque cependant que l'ailette 24 est solidarisée à la portion de paroi 2 unique opposée à la fente 7. Par conséquent, cette ailette constitue la paroi de guidage de référence pour la détermination de la distance la séparant de l'extrémité de la lame 8. En outre, cette même paroi 2 est également munie d'une seconde portion de moyen de guidage pour le maintien de la direction initiée par la première portion. Cette seconde portion du moyen de guidage est représentée par un couple d'ailettes 25,25a également disposées en opposition l'une de l'autre au niveau du compartiment 6 de coupe, chacune d'elles formant également ressort. Par ailleurs, chacune de ces ailettes 24,24a ; 25,25a est solidarisée à la paroi 2 et forme un angle avec celle-ci lequel est dirigé vers la lame 8. D'autre part, on observe, à la figure 3, que l'axe reliant le couple d'ailettes 24,24a est perpendiculaire à l'axe reliant le couple d'ailettes 25,25a de façon à conserver et au besoin améliorer le guidage du pain lors de son parcours dans le boîtier.

La figure 1 montre également la présence d'un premier capteur de pression 26 situé au niveau des ailettes 24,24a et relié au moteur d'entraînement en vue d'enclencher la rotation de la lame de même qu'un second capteur de pression 27 positionné au niveau de l'ailette 25a apte à arrêter ce moteur.

D'autre part, la figure 1 révèle que l'ensemble ainsi constitué est complété par un réceptacle 28 formé d'un compartiment 29 pour la réception du pain tranché et d'un compartiment 30 muni d'un tiroir 31 pour la récupération des miettes produites lors de la coupe. Ces deux compartiments sont séparés l'un de l'autre par une grille 32 apte à ne laisser passer que ces miettes et non le pain tranché lui-même.

A la lumière de ce qui précède, on observe que lors d'une mise en oeuvre du dispositif de l'invention, on ajuste d'abord la position de la lame 8 selon la profondeur de coupe souhaitée dans le sens de la largeur du pain à trancher. A cet effet, on agit sur la tige filetée 22 en la repoussant dans le sens du compartiment 6 de coupe ou dans le sens inverse, ce qui a pour effet de respectivement comprimer ou relâcher le ressort 20 par l'intermédiaire de la béquille 13 qui entraîne, dans la rainure 11, le tube support 10 muni de l'axe 9 respectivement dans le sens du compartiment de coupe ou dans le sens inverse. Plus ce ressort sera comprimé, plus importante sera la portion de lame à l'intérieur du compartiment de coupe et plus profond sera le tranchage effectué dans la largeur du pain.

Par l'ouverture 4 du boîtier, on introduit alors le pain à trancher, ce qui provoque l'écartement du couple d'ailettes 24,24a en direction de la paroi 2. Suite à la pression exercée par l'aile 24a sur le capteur de pression 26, le moteur d'entraînement de la lame 8 s'enclenche provoquant la rotation de celle-ci dans le sens indiqué par la flèche à la figure 1. Le pain, lors de son déplacement dans le boîtier, rencontre alors la lame 8 qui sous l'effet de sa rotation l'entraîne alors entre les ailettes 25,25a tout en le tranchant longitudinalement selon la profondeur de coupe déterminée au préalable. Ces ailettes 25,25a, en s'écartant vers la paroi 2, assurent ainsi un maintien et un renforcement du centrage et du guidage réalisés par les ailettes 24,24a. Lorsque le pain tranché selon sa longueur totale cesse d'exercer une pression sur les ailettes 25,25a, celles-ci se rapprochent l'une de l'autre amenant un relâchement de leur contact sur le capteur de pression 27, ce qui provoque l'arrêt du moteur d'entraînement de la lame 8. Le pain tranché est alors récupéré dans le compartiment 29 du réceptacle 28 tandis que les miettes sont recueillies dans le compartiment 30 essentiellement dans le tiroir 31 après passage par la grille 32.

Le dispositif selon l'invention présente des avantages substantiels par rapport aux dispositifs connus et utilisés. Tout d'abord, il accroît indéniablement la sécurité de l'utilisateur puisque les mains de ce dernier ne sont plus en contact avec le pain lors de son tranchage. De cette manière, les possibilités de blessures et de détérioration de la paume et des doigts en raison de l'effet abrasif produit par la croûte du pain peuvent être évitées. De plus, il permet de garder propre et exempt de miettes le plan de travail de l'utilisateur désireux de fourrer de diverses garnitures le pain tranché ou simplement ouvert.

## Revendications

1. Méthode pour trancher du pain, en particulier de forme oblongue ou sensiblement oblongue, au départ d'un boîtier (1) comprenant une ou plusieurs parois (2) latérales longitudinales délimitant un premier compartiment (5) dit déversoir pour l'introduction du pain à trancher et un second compartiment (6) dit compartiment de coupe et dont une des parois latérales de ce boîtier ou la paroi latérale unique de ce boîtier est pourvue, au niveau du compartiment de coupe, d'une fente (7) longitudinale pour passage d'une lame circulaire (8) de coupe apte à tourner dans le sens antihorlogique et montée à rotation autour d'un axe (9) extérieur au boîtier, cette méthode, qui consiste à introduire le pain dans le déversoir après avoir adapté, selon les besoins, la distance à l'intérieur du boîtier entre l'extrémité de la lame et, situé en regard de la fente, un moyen fixe pour le guidage du pain et à réceptionner le pain tranché, étant **caractérisée en ce que** cette distance à l'intérieur du boitier est adaptée par modification de la position de l'axe support de la lame, en sorte que sous l'effet de ladite lame en rotation, le pain, rendu mobile par application de la force d'entraînement de cette lame, est tranché longitudinalement sur sa largeur totale ou sur une partie de celle-ci.

2. Méthode selon la revendication 1, **caractérisée en ce que** la position de l'axe support de la lame est modifiée par déplacement de cet axe, à l'extérieur du boîtier, depuis une extrémité distale jusqu'à une position d'extrémité proximale et inversement.

3. Dispositif, pour la mise en oeuvre de la méthode selon la revendication 1 ou 2, formé d'un boîtier (1) comprenant une ou plusieurs parois (2) latérales longitudinales délimitant un premier compartiment (5) dit déversoir pour l'introduction du pain à trancher, un second compartiment (6) dit compartiment de coupe et éventuellement un troisième compartiment (29) dit réceptacle pour la réception du pain tranché, ladite paroi latérale unique ou l'une desdites parois latérales étant pourvue, à hauteur du compartiment de coupe, d'une fente (7) pour passage d'une lame circulaire (8) de coupe apte à tourner dans le sens antihorlogique et montée à rotation sur un axe (9) extérieur au boîtier, **caractérisé :**
- **en ce que** la position de cet axe support est mobile par rapport à la fente et la portion de lame à l'intérieur du compartiment de coupe a une longueur sensiblement égale ou inférieure à la largeur de ce compartiment, et
- **en ce qu'**il comporte, situé à l'intérieur du boitier et éventuellement en regard de la fente, un moyen fixe pour le guidage du pain.

4. Dispositif selon la revendication 3, **caractérisé en ce que** la position de l'axe support de la lame est mobile depuis une position d'extrémité proximale, par rapport à la fente, en sorte que la ligne de coupe de cette lame occupe sensiblement la largeur du compartiment de coupe jusqu'à une position d'extrémité distale en sorte que la ligne de coupe de cette lame pénètre légèrement à l'intérieur dudit compartiment de coupe.

5. Dispositif selon la revendication 3, **caractérisé en ce que** le moyen de guidage comprend, en regard de la fente, la paroi (2) latérale du boîtier ou une portion de paroi latérale unique du boîtier.

6. Dispositif selon la revendication 3, **caractérisé en ce que** le moyen de guidage comprend, en regard de la fente, une paroi supplémentaire rapportée à l'intérieur du boîtier ou une portion de paroi supplémentaire rapportée à l'intérieur du boîtier.

7. Dispositif selon la revendication 3, **caractérisé en ce que** le moyen de guidage comprend plusieurs portions de parois supplémentaires rapportées à l'intérieur du boîtier, l'une de ces portions étant éventuellement opposée à la fente.

8. Dispositif selon la revendication 7, **caractérisé en ce que** les portions de parois supplémentaires se présentent sous forme d'au moins un couple d'ailettes (24 ; 24a) en sorte qu'au moins une ailette est éventuellement positionnée en regard de la fente et que les ailettes de chaque couple sont disposées :
a) chacune sur une des parois latérales, ces ailettes étant opposées l'une à l'autre
ou
b) chacune sur une des portions de la paroi latérale unique, ces ailettes étant opposées l'une à l'autre.

9. Dispositif selon la revendication 3, **caractérisé en ce que** le moyen de guidage comprend au moins deux couples d'ailettes (24 ; 24a) (25 ; 25a), l'axe reliant les ailettes d'un couple étant perpendiculaire à l'axe reliant les ailettes du couple immédiatement adjacent.

10. Dispositif selon la revendication 8 ou 9, **caractérisé en ce que** chaque ailette comporte un premier bord transversal solidarisé à la paroi latérale ou à une portion de paroi latérale unique et un second bord transversal maintenu flottant.

11. Dispositif selon la revendication 10, **caractérisé en ce que** chaque ailette forme avec soit la paroi latérale à laquelle elle est solidarisée soit la portion de paroi latérale unique à laquelle elle est solidarisée, un angle dirigé dans le sens de déplacement du pain et dont l'amplitude peut varier lorsqu'une force est appliquée sur cette ailette par ce pain en transit dans le boîtier.

12. Dispositif selon l'une des revendications 3 à 11, **caractérisé en ce qu'**il est muni intérieurement de moyens de déclenchement et d'arrêt d'un moteur d'entrainement de l'axe support de la lame.

13. Dispositif selon la revendication 12, **caractérisé en ce que** le moyen de déclenchement est apte à entrer en contact avec une ailette du moyen de guidage située au niveau du déversoir et le moyen d'arrêt est apte à entrer en contact avec une ailette du moyen de guidage située au niveau du compartiment de coupe.

## Claims

1. Method for slicing loaves of bread, particularly loaves having an oblong or essentially oblong shape, from a housing (1) comprising one or more longitudinal lateral walls (2) defining a first compartment (5), known as the feeding compartment, for the introduction of the loaf of bread to be sliced, and a second compartment (6), known as the cutting compartment, and whose sole lateral wall, or one of whose lateral walls, is provided, in proximity to the cutting compartment, with a longitudinal slot (7) for the passage of a circular cutting blade (8) that can rotate counterclockwise and that is mounted rotatively on a shaft (9) external to the housing, said method which consists in placing the loaf in the feeding compartment after the distance inside the housing between the extremity of the blade and, located facing the slot, a fixed means for guiding the loaf, has been adjusted as necessary, and receiving the sliced loaf, being **characterized in that** said distance inside the housing is adjusted by changing the position of the shaft carrying the blade, such that, due to the effect of the rotating blade, the loaf, to which motion has been imparted by the tractive force of the said rotating blade, is sliced longitudinally over its entire length or over a portion thereof.

2. Method according to claim 1, **characterized in that** the position of the shaft carrying the blade is changed by shifting the said shaft, outside the housing, from a distal extremity to a proximal extremity, and conversely.

3. Device for the implementation of the method according to claim 1 or 2, which device consists of a housing (1) comprising one or more longitudinal lateral walls (2) defining a first compartment (5), known as the feeding compartment, for the introduction of the loaf to be sliced, a second compartment (6), known as the cutting compartment, and, optionally, a third compartment (29), known as the receiver, for receiving the sliced loaf, said sole lateral wall, or one of said lateral walls, being provided, in proximity to the cutting compartment, with a slot (7) for the passage of a circular cutting blade (8) that can rotate counterclockwise and that is mounted rotatively on a shaft (9) external to the housing, **characterized:**
- **in that** the position of the said carrying shaft is movable in relation to the slot and the length of the portion of the blade located inside the cutting compartment is essentially equal to or less than the width of the said compartment; and
- **in that** it includes, located inside the housing and, optionally, facing the slot, a movable means for guiding the loaf of bread.

4. Device according to claim 3, **characterized in that** the position of the shaft carrying the blade is movable from a position at the proximal extremity, in relation to the slot, such that the cutting line of the said blade occupies essentially the width of the cutting compartment up to a position at the distal extremity, such that the cutting line of the said blade slightly penetrates the interior of the said cutting compartment.

5. Device according to claim 3, **characterized in that** the guidance means include, facing the slot, the lateral wall (2) of the housing or a portion of the sole lateral wall of the housing.

6. Device according to claim 3, **characterized in that** the guidance means include, facing the slot, a supplemental wall associated with the interior of the housing, or a portion of a supplemental wall associated with the interior of the housing.

7. Device according to claim 3, **characterized in that** the guidance means include multiple portions of supplemental walls associated with the interior of the housing, one of which portions may optionally be located facing the slot.

8. Device according to claim 7 **characterized in that** the portions of supplemental walls are provided in the form of at least one pair of fins (24 ; 24a), such that at least one fin is optionally positioned facing the slot, and such that each of the fins in each pair is located:
a) on one of the lateral walls, with the said fins facing each other;
or
b) on one of the portions of the sole lateral wall, with the said fins facing each other.

9. Device according to claim 3, **characterized in that** the guidance means include at least two pairs of fins (24 ; 24a) (25 ; 25a), with the axis linking the fins in one pair being perpendicular to the axis linking the fins in the immediately adjacent pair.

10. Device according to claim 8 or claim 9, **characterized in that** each fin includes a first transverse edge that is joined to the lateral wall or to a portion of the sole lateral wall, and a second transverse edge that is kept in a floating position.

11. Device according to claim 10, **characterized in that** each fin forms, either with the lateral wall to which it is joined or with the portion of the sole lateral wall to which it is joined, an angle oriented in the direction of travel of the loaf of bread, the amplitude of which angle may vary when a certain amount of force is applied to the said fin by the said loaf of bread in transit within the housing.

12. Device according to any one of claims 3 to 11, **characterized in that** it is provided internally with means for starting and stopping a motor that drives the shaft that carries the blade.

13. Device according to claim 12, **characterized in that** the starting means are suitable for coming into contact with one of the fins of the guidance means, which fin is located in proximity to the feeding compartment, and **in that** the stopping means are suitable for coming into contact with one of the fins of the guidance means, which fin is located in proximity to the cutting compartment.

## Patentansprüche

1. Verfahren zum Schneiden von Brot, insbesondere länglicher oder annähernd länglicher Form, ausgehend von einem Gehäuse (1), das in Längsrichtung eine oder mehrere Seitenwände (2) umfasst, welche einen ersten Bestandteil (5), der als Einzug bezeichnet wird und zum Einführen des zu schneidenden Brotes dient, und einen zweiten Bereich (6), der als Schneidebereich bezeichnet wird, begrenzen, wobei eine der Seitenwände dieses Gehäuses oder die einzige Seitenwand dieses Gehäuses auf Höhe des Schneidebereichs in Längsrichtung mit einem Spalt (7) für den Durchgang einer kreisförmigen Schneideklinge (8) versehen ist, wobei diese dazu befähigt ist, sich gegen den Uhrzeigersinn zu drehen, und derart angebracht ist, dass sie sich um eine Achse (9), welche sich außerhalb des Gehäuses befindet, drehen kann, wobei dieses Verfahren, das darin besteht, das Brot in den Einzug einzuführen, nachdem erforderlichenfalls im Inneren des Gehäuses der Abstand zwischen dem äußersten Ende der Klinge und einem festen Brotführungsmittel, welches dem Spalt gegenüberliegt, angepasst wurde, und das geschnittene Brot entgegenzunehmen, **dadurch gekennzeichnet ist, dass** dieser Abstand im Inneren des Gehäuses angepasst wird, indem die Lage der Achse, welche die Klinge trägt, derart abgeändert wird, dass das Brot, welches durch die Anwendung der Antriebskraft der Klinge beweglich geworden ist, unter Einwirkung der sich drehenden Klinge in Längsrichtung über seine gesamte Breite oder über einen Teil derselben geschnitten wird.

2. Verfahren nach Anspruch 1, **dadurch gekennzeichnet, dass** die Lage der Achse, welche die Klinge trägt, dadurch abgeändert wird, dass diese Achse außerhalb des Gehäuses von einem distalen Ende bis zu einer Lage am proximalen Ende verschoben wird und umgekehrt.

3. Vorrichtung zur Durchführung des Verfahrens nach Anspruch 1 oder 2, gebildet aus einem Gehäuse (1), das in Längsrichtung eine oder mehrere Seitenwände (2) umfasst, welche einen ersten Bereich (5), der als Einzug bezeichnet wird und zum Einführen des zu schneidenden Brotes dient, einen zweiten Bereich (6), der als Schneidebereich bezeichnet wird, und möglicherweise einen dritten Bereich (29), der als Auffang bezeichnet wird und der Entgegennahme des geschnittenen Brotes dient, begrenzen, wobei die einzige Seitenwand oder eine der Seitenwände auf Höhe des Schneidebereichs mit einem Spalt (7) für den Durchgang einer kreisförmigen Schneideklinge (8) versehen ist, welche dazu befähigt ist, sich gegen den Uhrzeigersinn zu drehen, und derart angebracht ist, dass sie sich um eine Achse (9), welche sich außerhalb des Gehäuses befindet, drehen kann, **dadurch gekennzeichnet,**
- **dass** die Lage dieser Trägerachse bezüglich des Spaltes beweglich ist und der Klingenabschnitt, der sich im Inneren des Schneidebereichs befindet, eine Länge hat, die im Wesentlichen gleich der Breite dieses Bereichs oder kleiner als diese ist, und
- **dass** sie ein festes Brotführungsmittel aufweist, das im Inneren des Gehäuses und möglicherweise dem Spalt gegenüber gelegen ist.

4. Vorrichtung nach Anspruch 3, **dadurch gekennzeichnet, dass** die Lage der Klingenträgerachse ausgehend von einer Lage am bezüglich des Spalts proximalen Ende, in welcher die Schnittlinie dieser Klinge im Wesentlichen die Breite des Schneidebereichs einnimmt, bis zu einer Lage am distalen Ende, in welcher die Schnittlinie dieser Klinge geringfügig ins Innere des Schneidebereichs eindringt, beweglich ist.

5. Vorrichtung nach Anspruch 3, **dadurch gekennzeichnet, dass** das Führungsmittel, dem Spalt gegenüberliegend, die Seitenwand (2) des Gehäuses oder einen Abschnitt der einzigen Seitenwand des Gehäuses umfasst.

6. Vorrichtung nach Anspruch 3, **dadurch gekennzeichnet, dass** das Führungsmittel, dem Spalt gegenüberliegend, eine zusätzliche Wand, die im Inneren des Gehäuses angesetzt ist, oder einen zusätzlichen Wandabschnitt, der im Inneren des Gehäuses angesetzt ist, umfasst.

7. Vorrichtung nach Anspruch 3, **dadurch gekennzeichnet, dass** das Führungsmittel mehrere zusätzliche Wandabschnitte, die im Inneren des Gehäuses angesetzt sind, umfasst, wobei einer dieser Abschnitte möglicherweise dem Spalt gegenüberliegt.

8. Vorrichtung nach Anspruch 7, **dadurch gekennzeichnet, dass** die zusätzlichen Wandabschnitte in Form mindestens eines Flügelpaares (24; 24a) vorliegen, dass mindestens ein Flügel möglicherweise dem Spalt gegenüberliegt und dass die Flügel jedes Paares folgendermaßen angeordnet sind:
a) jeweils auf einer der Seitenwände, wobei die Flügel einander gegenüberliegen
oder
b) jeweils auf einem der Abschnitte der einzigen Seitenwand wobei die Flügel einander gegenüberliegen.

9. Vorrichtung nach Anspruch 3, **dadurch gekennzeichnet, dass** das Führungsmittel mindestens zwei Flügelpaare (24; 24a) (25; 25a) umfasst, wobei die Achse, welche die Flügel eines Paares verbindet, rechtwinklig zur Achse ist, welche die Flügel des unmittelbar benachbarten Paares verbindet.

10. Vorrichtung nach Anspruch 8 oder 9, **dadurch gekennzeichnet, dass** jeder Flügel einen ersten Querrand, der fest mit der Seitenwand oder mit einem Abschnitt der einzigen Seitenwand verbunden ist, und einen zweiten Querrand, der freiliegend ist, aufweist.

11. Vorrichtung nach Anspruch 10, **dadurch gekennzeichnet, dass** jeder Flügel entweder mit der Seitenwand, mit welcher er fest verbunden ist, oder mit dem Abschnitt der einzigen Seitenwand, mit welchem er fest verbunden ist, einen Winkel bildet, der entsprechend der Fortbewegungsrichtung des Brotes ausgerichtet ist und dessen Winkelweite variieren kann, wenn das Brot, welches das Gehäuse durchläuft, eine Kraft auf diesen Flügel ausübt.

12. Vorrichtung nach einem der Ansprüche 3 bis 11, **dadurch gekennzeichnet, dass** sie mit integrierten Mitteln zum Auslösen und Anhalten eines Motors zum Antrieb der Klingenträgerachse ausgestattet ist.

13. Vorrichtung nach Anspruch 12, **dadurch gekennzeichnet, dass** das Auslösemittel dazu befähigt ist, mit einem Flügel des Führungsmittels, welcher auf Höhe des Einzugs liegt, in Kontakt zu treten, und das Anhaltemittel dazu befähigt ist, mit einem Flügel des Führungsmittels, welcher auf Höhe des Schneidebereichs liegt, in Kontakt zu treten.
